# EUROPÄISCHE PATENTSCHRIFT

(11) **EP 3 512 738 B1**
(45) Veröffentlichungstag und Bekanntmachung des Hinweises auf die Patenterteilung: **04.11.2020**
(21) Anmeldenummer: 17768416.4
(22) Anmeldetag: 11.09.2017
(51) Int. Cl.: B60N 2/28, B60N 2/427

(54) **KINDERSITZ**
CHILD SAFETY SEAT
SIÈGE ENFANT

(30) Priorität: 14.09.2016 DE 102016117312
(43) Veröffentlichungstag der Anmeldung: 24.07.2019
(73) Patentinhaber: CYBEX GmbH, 95448 Bayreuth (DE)
(72) Erfinder: PELESKA, Franz, 1220 Wien (AT); HAZEU, Hendrik, 95448 Bayreuth (DE); THURN, Christoph, 95448 Bayreuth (DE)
(74) Vertreter: Pfrang, Tilman
(86) Internationale Anmeldenummer: PCT/EP2017/072680
(87) Internationale Veröffentlichungsnummer: WO 2018/050576

(56) Entgegenhaltungen:
- WO-A2-2013/028628
- DE-A1- 10 260 812
- DE-A1- 19 850 961
- DE-C1- 19 952 777
- DE-U1-202012 102 471
- US-B1- 6 736 455

## Beschreibung

Die Erfindung betrifft einen Kindersitz zur Anbringung auf einem Fahrzeugsitz, insbesondere Kraftfahrzeugsitz, gemäß Anspruch 1.

In diesem Zusammenhang sei angemerkt, dass im Rahmen der Erfindung der Begriff "Kindersitz" als Oberbegriff für (klassische) Kindersitze und Babyschalen zu verstehen ist, also "Kindersitz" als "Kindersitz, insbesondere (klassischer) Kindersitz oder Babyschale" zu verstehen ist. Somit sind für einen Kindersitz vorgesehen Merkmale im Rahmen dieser Erfindung grundsätzlich auch auf eine Babyschale anwendbar und umgekehrt, solange nichts Gegenteiliges erwähnt ist. Selbiges gilt für den Begriff "Kind", der ebenfalls als Oberbegriff für Kinder und Babys sowie Kleinkinder zu verstehen ist.

Ein gattungsgemäßer Kindersitz ist beispielsweise aus DE 20 2015 104 792 U1 bekannt. Dort wird auch ein Stützfuß beschrieben, der einen Abstützungspunkt definiert und damit ein Vorkippen des Sitzes verhindern soll (auch wenn er per se keine Befestigung darstellt). Derartige Stützfüße sind im Stand der Technik üblicherweise an einer Basis angebracht, auf der der Sitz befestigt wird. Durch ein Verringern oder Reduzieren des Nach-vorne-kippens sollen mit einem Stützfuß auch die Folgen eines Rückpralls eingemindert werden.

Ferner ist aus DE 10 260 812 A1 schwenkbarer Sicherheitssitz bekannt, der mit einem Basisgestell durch gelenkige Schwenkarme verbunden ist. Aus US 6 736 455 B1 ist ein Kindersitz bekannt, der aus zwei ausfahrbaren Teilen aufgebaut ist und ebenfalls über ein Dämpfungssystem verfügt. Des Weiteren ist aus DE 198 50 961 A1 ein Kindersitz mit einem in den Kindersitz integrierten Dämpfungssystem bekannt, wobei der Kindersitz in einer zweiteiligen, beweglichen Form ausgeführt ist.

Grundsätzlich bewegt sich bei einem Frontalaufprall eines Fahrzeugs der darin befindliche Kindersitz (gegenüber dem Fahrzeugsitz, auf dem er montiert wird als Bezugspunkt) aufgrund seiner Trägheit nach vorne. Diese Bewegung nach vorne wird durch Sicherungen (z.B. umfassend ein Gurtsystem und dergleichen) eingeschränkt. Diese Bewegung umfasst üblicherweise eine Rotations- bzw. Kippbewegung nach vorne, insbesondere wenn der Kindersitz vergleichsweise weit unten gesichert wird. Wandelt sich diese Bewegung nach vorne (beispielsweise aufgrund der Wirkung der Befestigung des Kindersitzes am Fahrzeugsitz und/oder einem ggf. elastischen Widerstand des Fahrzeugsitzes) zu einem späteren Zeitpunkt um, bewegt sich der Kindersitz gegenüber dem Fahrzeugsitz zurück (kippt insbesondere zurück in den Fahrzeugsitz) und prallt dort auf. Dieser Aufprall soll im Folgenden als "Rückprall" ("Rebound") bezeichnet werden.

Grundsätzlich sind verschiedene Möglichkeiten bekannt, um Kindersitze gegenüber den negativen Folgen eines derartigen "Rebound" (Rückpralls) zu schützen, wobei diese Möglichkeiten im Wesentlichen zur Minderung der direkten Folgen eines Frontalaufpralls entwickelt wurden. Beispielsweise ist es bekannt, zusätzlich zu üblichen Befestigungen mittels Bauchgurt des Fahrzeugs, Isofix oder Ähnlichem (also zwei unteren Befestigungspunkten) eine weitere Befestigung (beispielsweise mittels einem sogenannten "top tether" bzw. eines oberen Haltegurts) im oberen Bereich des Sitzes durchzuführen. Eine ähnliche Möglichkeit bietet ein Stützfuß, wie bereits weiter oben erläutert. Mit Hilfe eines sogenannten "tether strap" (Gurtband) kann auch in einem von der Lehne des Fahrzeugsitzes entfernten Bereich des Kindersitzes ein zusätzlicher Befestigungspunkt (Befestigung nach unten) realisiert werden. Insbesondere Sitze, die im Zusammenspiel mit einer Basis verwendet werden, können auch durch einen sogenannten "anti-rebound-bar" (Anti-Rückprall-Bügel) gesichert werden. Dazu wird auf der nahe der Sitzlehne des Fahrzeugs liegenden Seite der Basis ein Bügel angebracht oder die Form der Basis an dieser Seite entsprechend weiter nach oben gezogen. Weiterhin können im Sitz oder der Basis oder der Befestigung am Fahrzeug energieabsorbierende Elemente eingesetzt werden.

Die bekannten Lösungen weisen jedoch verschiedene Nachteile auf. "Top tether" und "tether strap" können nur verwendet werden, wenn im Fahrzeug geeignete Arretierungsmöglichkeiten vorhanden sind. Der Einsatz eines Stützfußes ist ebenfalls nicht immer in allen Fahrzeugen möglich, beispielsweise wenn der Stützfuß im Bereich der Abdeckung eines Gefaches zu stehen käme. Ein "anti-rebound-bar" kann bei vorwärts gerichteten Sitzen nur zusammen mit einer Basis verwendet werden. Auch Stützfuß und "tether strap" werden fast ausschließlich bei Sitzen mit Basis eingesetzt, da dies die Installation des Sitzes erleichtert. "Top tether", "tether strap" und auch Stützfuß erfordern beim Einbau eine aufwändige Einstellung und/oder Befestigung und sind daher anfällig für eine Fehlbenutzung. Insgesamt ist der Einbau und insbesondere der Wechsel des Fahrzeugs bei derartigen Sitzen vergleichsweise wenig komfortabel. "Tether strap" und "anti-rebound-bar" bergen das Risiko, dass nach dem eigentlichen Frontalaufprall mit dem Rebound ein zweiter "harter" Aufprall (Rückprall) generiert wird. Denn es wird nicht das Verkippen des Sitzes verhindert, sondern es wird lediglich das Zurückkippen begrenzt. Energieabsorbierende (energieverzehrende) Elemente müssen immer auf eine bestimmte Aufprallenergie abgestimmt sein und sind nach ihrer Wirkung oftmals verbraucht, d.h. sie können nicht ohne weiteres in ihren Ausgangszustand versetzt werden. Erfolgt ein Aufprall mit einer anderen Energie als der eingeplanten, so entfalten die energieverzehrenden (energieabsorbierenden) Elemente entweder keine Wirkung oder sie wirken zu früh. Um dem abzuhelfen, müsste eine Vielzahl energieverzehrender Mittel verwendet werden. Ein "anti-rebound-bar" ist relativ groß und sperrig. Generell sind alle bekannten Mittel vergleichsweise platzaufwändig und können dadurch auch im Weg stehen.

Zusammenfassend ist es im Stand der Technik problematisch, dass nur vergleichsweise aufwändige und sperrige Mittel zum Schutz vor den negativen Folgen eines Rückpralls bekannt sind und die negativen Folgen des Rückpralls zum Teil nur unzureichend abgemildert werden.

Es ist daher Aufgabe der Erfindung, mit einfachen Mitteln die negativen Folgen eines Rückpralls zuverlässig abzumildern.

Diese Aufgabe wird durch den Gegenstand gemäß Anspruch 1 gelöst.

Insbesondere wird die Aufgabe durch einen Kindersitz zur Anbringung auf einem Fahrzeugsitz, vorzugsweise Kraftfahrzeugsitz, gelöst, umfassend einen Sitzabschnitt und eine Rückenlehne sowie mindestens ein Rückprallschutzelement, das eine Ruhestellung und mindestens eine Funktionsstellung einnehmen kann, wobei ein distales Ende des Rückprallschutzelementes in der mindestens einen Funktionsstellung weiter nach außen (also insbesondere nach hinten oder nach vorne, in Richtung eines Endes des Kindersitzes bzw. ein Ende des Kindersitzes definierend) verlagert ist als in der Ruhestellung, wobei eine Betätigungseinrichtung vorgesehen und derart ausgebildet ist, dass das Rückprallschutzelement bei Überschreiten eines Grenzwertes einer Beschleunigung des Kindersitzes (an einem vorbestimmten Punkt) von seiner Ruhestellung in die Funktionsstellung überführt wird, wobei das Rückprallschutzelement in der Funktionsstellung von einer Rückseite der Rückenlehne vorsteht.

Ein Kerngedanke der Erfindung liegt darin, dass ein Rückprallschutzelement vorgesehen wird und abhängig von einer bestimmten Beschleunigung (wie sie im Falle von Kollisionen, insbesondere Frontalkollisionen auftreten) von einer Ruhestellung in eine Funktionsstellung überführt wird.

Unter Beschleunigung ist insbesondere eine Abnahme der Geschwindigkeit oder eine Zunahme der Geschwindigkeit, speziell in Fahrtrichtung zu verstehen. Beispielsweise im Falle einer frontalen Kollision werden das Fahrzeug und damit der Fahrzeugsitz abgebremst. Aufgrund der Sicherungssysteme (u.a. Gurte) wird selbstverständlich auch der montierte Kindersitz abgebremst, jedoch derart verzögert, dass er sich zunächst gegenüber dem Fahrzeugsitz nach vorne bewegt, was letztlich (wie oben beschrieben) zu dem Rückprall-Phänomen führen kann. Gegenüber dem Untergrund, auf dem sich das Fahrzeug bewegt, als Bezugsobjekt wird der Kindersitz also abgebremst, gegenüber dem Fahrzeugsitz als Bezugspunkt beschleunigt der Kindersitz zunächst (im Sinne einer Geschwindigkeitszunahme), bevor er abgebremst wird und dann sogar seine Bewegung umkehrt. Dadurch, dass nun der Kindersitz so ausgestaltet ist (mit der Betätigungseinrichtung und dem Rückprallschutzelement), dass in einer derartigen Beschleunigungsphase (insbesondere Abbremsphase gegenüber dem Untergrund) ein Überführen des Rückprallschutzelementes von der Ruhestellung in die Funktionsstellung durchgeführt wird, können negative Folgen des Rückpralls vermieden oder zumindest reduziert werden, da das Rückprallschutzelement in der Funktionsstellung weiter in Richtung eines der beiden Enden des Kindersitzes vorsteht. Grundsätzlich kann der Grenzwert der Beschleunigung des Kindersitzes an einem beliebigen Punkt des Kindersitzes betrachtet werden. Bevorzugt kommt es jedoch auf die Beschleunigung an einem Lagerabschnitt der Betätigungseinrichtung an.

Insgesamt wird durch die Erfindung ein darin sitzendes Kind vergleichsweise gut vor einem Rückprall (Rebound) bzw. dessen Folgen geschützt, insbesondere nicht nur bei einer bestimmten Aufprallenergie. Weiterhin kann der Rückprallschutz variabel und dennoch wirksam eingebaut und verwendet werden. Insgesamt wird eine einfache Installation des Kindersitzes begünstigt (beispielsweise nur unter Verwendung des fahrzeugeigenen Gurtes und/oder des Isofix-Systems/Latch-Systems). Das Fehlbenutzungsrisiko ist äußerst gering. Der Rückprallschutz ist auch ohne die Verwendung einer Basis möglich und wirksam. Der Rückprallschutz beeinflusst weiterhin bestenfalls in geringem Maße Größe und Gewicht des Sitzes. Weiterhin ist eine Kombination mit weiteren (bekannten) Mitteln zur Sicherung gegen einen Rückprall und Mitteln zur Sicherung gegen einen Frontalaufprall (beispielsweise Fangkörper, Gurtzeug, Airbag) möglich. Insgesamt wird ein sicherer Rückprallschutz mit geringem Platzbedarf realisiert. Ein Zurückkippen des Sitzes kann auf einfache Art und Weise ganz oder zumindest teilweise verhindert werden.

Vorzugsweise ist mindestens ein Rückprallschutzelement vorgesehen, dessen distales Ende in der Funktionsstellung (gegenüber der Ruhestellung) weiter in eine Richtung, die vom Fußende zum Kopfende des Kindersitzes weist, verlagert ist. Alternativ oder zusätzlich ist mindestens ein Rückprallschutzelement vorgesehen ist, dessen distales Ende in der Funktionsstellung im Gebrauch einer Rückenlehen des Fahrzeugsitzes näher ist als in der Ruhestellung. Alternativ oder zusätzlich ist mindestens ein Rückprallschutzelement vorgesehen, dessen distales Ende in der Funktionsstellung weiter in eine Richtung, die vom Kopfende in Richtung des Fußendes des Kindersitzes weist, verlagert ist (gegenüber der Ruhestellung). Es können also ggf. (mindestens) zwei Rückprallschutzelemente vorgesehen sein, die sowohl einen Rückprallschutz in Bezug auf ein hinteres Ende des Kindersitzes (insbesondere bei einer Montage in Vorwärtsrichtung) und einen Rückprallschutz an einem vorderen Ende des Kindersitzes (insbesondere bei einer Rückwärtsmontage) ermöglichen. Besonders bevorzugt ist es, wenn das Rückprallschutzelement in der Funktionsstellung bei einer Vorwärtsmontage (also bei einer Montage, in der das Kind in Fahrtrichtung blickt) in Richtung Kopfende verlagert wird. Gerade in derartigen Situationen können erhebliche Rückpralleffekte auftreten. Besonders problematisch ist es hierbei, dass sich die Rückenlehne des Kindersitzes wieder nach hinten in Richtung Rückenlehne des Fahrzeugsitzes bewegen kann, während sich der Kopf des Kindes zum gleichen Zeit noch von der Rückenlehne des Fahrzeugsitzes wegbewegt. Dadurch können gerade auf den empfindlichen Kopf äußerst problematische Kräfte einwirken. Dies wird dadurch verhindert oder zumindest reduziert, dass dieses Zurückbewegen verhindert bzw. eingeschränkt wird. Insgesamt wird damit ein effektiver Rückprallschutz erreicht.

In einer konkreten Ausführungsform steht das Rückprallschutzelement in der Funktionsstellung von einer Rückseite der Rückenlehne vor (beispielsweise um mindestens 2 cm oder mindestens 3 cm).

In einer bevorzugten Ausführungsform ist das Rückprallschutzelement von der Ruhe- in die Funktionsstellung verschwenkbar. Ein Schwenkwinkel beträgt vorzugsweise mindestens 20 Grad, weiter vorzugsweise mindestens 35 Grad, noch weiter vorzugsweise mindestens 45 Grad und/oder vorzugsweise höchstens 180 Grad, weiter vorzugsweise höchstens 150 Grad, noch weiter vorzugsweise höchstens 135 Grad. Durch eine derartige Verschwenkung kann auf einfache Art und Weise eine Überführung von Ruhe- in die Funktionsstellung realisiert werden. Alternativ zu einer Verschwenkung wäre auch eine translatorische (ggf. teleskopartige) Überführung möglich.

Vorzugsweise ist das Rückprallschutzelement durch eine(n) (insbesondere verschwenkbare(n)) Klappe oder Bügel gebildet oder umfasst eine(n) solche(n). Durch eine(n) derartige(n) Klappe (Bügel) kann mit einer einfachen Struktur ein effektiver Rückprallschutz erreicht werden.

Die Betätigungseinrichtung kann eine träge Masse, insbesondere eine Schwungmasse, aufweisen. Die träge Masse (Schwungmasse) ist vorzugsweise derart gelagert, dass sie sich im Falle eines Abbremsens eines Hauptkörpers des Kindersitzes gegenüber diesem weiterbewegt und damit eine Überführung in die Funktionsstellung freigibt. Unter einem "Hauptkörper" soll in diesem Zusammenhang der Kindersitz ohne die gegenüber diesem bewegbare träge Masse verstanden werden. Dadurch kann auf einfache Art und Weise und zuverlässig ein Auslösen und Überführen des Rückprallschutzes erreicht werden. Das Gewicht der trägen Masse kann beispielsweise mindestens 20 Gramm oder mindestens 40 Gramm betragen.

Die Betätigungseinrichtung kann eine Vorspannvorrichtung, insbesondere eine Federeinrichtung, aufweisen, die das Rückprallschutzelement in der Ruhestellung in Richtung Funktionsstellung drängt. Mit einer derartigen Vorspannvorrichtung kann (im Falle des Lösens einer Haltevorrichtung, insbesondere des Lösens einer Arretierung) schnell ein Überführen von der Ruhe- in die Funktionsstellung erreicht werden. Dadurch kann auf sichere Art und Weise ein Rückprallschutz erreicht werden.

Vorzugsweise weist die Betätigungseinrichtung eine Halteeinrichtung, insbesondere eine Rasteinrichtung auf, die ausgebildet ist, das Rückprallschutzelement in seiner Ruhestellung zu halten, insbesondere zu verrasten. Dadurch wird erreicht, dass das Rückprallschutzelement zuverlässig (solange es nicht benötigt wird) in der Ruhestellung verbleibt und nicht stört. Dies erleichtert die Verwendung des Kindersitzes.

Weiterhin kann eine Funktionsstellungs-Halteeinrichtung, insbesondere eine Funktionsstellungs-Rasteinrichtung vorgesehen sein, um das Rückprallschutzelement in der Funktionsstellung zu halten, insbesondere zu verrasten. Ausführungsgemäß kann die Funktionsstellungs-Halteeinrichtung ein Federelement umfassen, das ggf. gleichzeitig für eine aktive Überführung in die Funktionsstellung ausgebildet ist. Eine derartige Funktionsstellungs-Halteeinrichtung (Funktionsstellungs-Rasteinrichtung) ist jedoch nicht zwingend. Auch wenn das Rückprallschutzelement in der Funktionsstellung nicht (fest) gehalten bzw. verrastet wird, kann zumindest ein gewisser Rückprallschutz erreicht werden, insbesondere in Zusammenwirken mit einer Rückenlehne des Fahrzeuges (beispielsweise wenn das Rückprallschutzelement so ausgerichtet ist, dass es aufgrund eines Relativwinkels gegenüber der Rückenlehne nicht (auf einfache Art und Weise) zurück in die Ruhestellung gedrückt werden kann).

Es können ggf. mindestens zwei oder sogar mindestens drei Funktionsstellungen eingenommen werden. Diese können sich insbesondere durch einen Schwenkwinkel gegenüber der Ruhestellung unterscheiden. Die verschiedenen Winkel können beispielsweise zwischen 0 und 180 Grad, vorzugsweise zwischen 45 Grad und 135 Grad liegen.

Der Beschleunigungsgrenzwert wird in Vielfachen der Erdbeschleunigung angegeben und kann mindestens 0,5 g oder mindestens 1,0 g oder mindestens 2,0 g oder mindestens 4,0 g oder mindestens 8,0 g oder mindestens 16,0 g oder mindestens 32,0 g betragen. Ggf. kann der Beschleunigungsgrenzwert höchstens 32,0 g oder höchstens 16,0 g oder höchstens 8,0 g betragen. Wenn die Betätigungseinrichtung erst bei vergleichsweise hohen Beschleunigungen anspricht, wird ein (unnötiges) Fehlauslösen vermieden oder zumindest unwahrscheinlicher. Wenn der Beschleunigungsgrenzwert vergleichsweise niedrig ist, wird ein äußerst zuverlässiges Auslösen des Rückprallschutzes erreicht.

Die Betätigungseinrichtung kann zum passiven und/oder aktiven Überführen in die Funktionsstellung (von der Ruhestellung) konfiguriert sein. Unter einem "passiven" Überführen ist insbesondere ein Überführen zu verstehen, bei dem ausschließlich die Wirkung der auftretenden Beschleunigung eine Verlagerung des Rückprallschutzelementes bewirkt. Unter einem "aktiven" Überführen ist ein Überführen zu verstehen, bei dem durch die Betätigungseinrichtung noch eine zusätzliche Kraft aufgebracht wird (beispielsweise bereitgestellt durch eine Vorspanneinrichtung, insbesondere Feder). In einer besonderen Ausführungsform kann jedoch auch eine Kombination aus passiven und aktiven Überfahren beispielsweise dergestalt realisiert sein, dass das Lösen einer Halteeinrichtung (Lösen einer Rasteinrichtung) passiv erfolgt (allein durch Wirken der Beschleunigung) und das Zurücklegen des Weges zwischen Ruhe- und Funktionsstellung aktiv unterstützt wird (beispielsweise durch Wirken einer Vorspanneinrichtung, insbesondere Feder).

Die Betätigungseinrichtung kann so ausgebildet sein, dass eine Zeitspanne zwischen Beginn und Ende des Überführens von Ruhe- in Funktionsstellung kleiner als 250 ms, vorzugsweise kleiner als 150 ms, noch weiter vorzugsweise kleiner als 100 ms, noch weiter vorzugsweise kleiner als 70 ms, noch weiter vorzugsweise kleiner als 50 ms, noch weiter vorzugsweise kleiner als 35 ms, noch weiter vorzugsweise kleiner als 25 ms, noch weiter vorzugsweise kleiner als 15 ms ist. Durch eine vergleichsweise kurze Überführungszeit wird realisiert, dass das Rückprallschutzelement bereits in seiner Funktionsstellung ist, wenn die Rückprallphase durchlaufen wird. Dadurch wird die Sicherheit erhöht.

Das Rückprallschutzelement kann zur Absorption von Energie ausgebildet ein, insbesondere mindestens ein energieabsorbierendes (energieverzehrendes) Element aufweisen. Dadurch werden die schädlichen Wirkungen des Rückpralls weiter auf einfache Art und Weise reduziert.

Das Rückprallschutzelement kann in der Ruheposition zumindest im Wesentlichen parallel zu einer das Rückprallschutzelement umgebenden Außenfläche des Kindersitzes angeordnet sein. Alternativ oder zusätzlich kann das Rückprallschutzelement in die umgebende Außenfläche eingebettet sein. Alternativ oder zusätzlich kann das Rückprallschutzelement bündig mit der umgebenden Außenfläche abschließen.

Generell kann sich das (bzw. mindestens ein) Rückprallschutzelement an einem der (Rücken-) Lehne des Fahrzeugsitzes zugewandten Ende des Kindersitzes befinden. Alternativ oder zusätzlich kann sich das (bzw. mindestens ein) Rückprallschutzelement an einem der Sitzfläche des Fahrzeugsitzes zugewandten Ende des Kindersitzes angeordnet sein.

Das Rückprallschutzelement (insbesondere die Klappe) kann nach oben, nach unten oder zur Seite öffenbar (schwenkbar) sein.

Die oben genannte Aufgabe wird weiterhin gelöst durch ein Fahrzeug, insbesondere Kraftfahrzeug, mit einem Kindersitz der oben beschriebenen Art. Weiterhin wird die Aufgabe gelöst durch die Verwendung eines Kindersitzes der oben beschriebenen Art für ein Fahrzeug, insbesondere Kraftfahrzeug.

In einer bevorzugten Ausführung sollte die (Seiten-)fläche des Rückprallschutzelements, mit der sich der Kindersitz im Fall eines Rückpralls am Fahrzeugsitz abstützt, zumindest im Wesentlichen flach sein und bei einem Rückprall an der entsprechenden Gegenfläche des Fahrzeugsitzes (Rückenlehne oder Sitzfläche) anliegen. Eine eher spitz- oder keilförmig zulaufende Fläche könnte in den Fahrzeugsitz eintauchen und diesen (ggf. erheblich) eindrücken oder sogar einschneiden. Die zum Anliegen vorgesehene Fläche kann in jeder Richtung mindestens 2 cm oder mindestens 3 cm groß sein Weitere Ausführungsformen der Erfindung ergeben sich aus den Unteransprüchen.

Nachfolgend wird die Erfindung anhand eines Ausführungsbeispieles beschrieben, das anhand der Abbildungen näher erläutert wird. Hierbei zeigen:
- Fig. 1: eine Schrägansicht eines Grundgerüstes des erfindungsgemäßen Kindersitzes in einer Explosionsansicht;
- Fig. 2: einen vergrößerten Ausschnitt aus Fig. 1;
- Fig. 3: einen Ausschnitt der Rückenlehne des erfindungsgemäßen Kindersitzes;
- Fig. 4: den Ausschnitt der Rückenlehne gemäß Fig. 3 in einer abweichenden Positionierung eines Rückprallschutzelementes;
- Fig. 5: einen Schnitt durch ein erfindungsgemäßes Rückprallschutzelement einschließlich Betätigungseinrichtung; und
- Fig. 6: einen weiteren Schnitt durch das erfindungsgemäße Rückprallschutzelement einschließlich Betätigungseinrichtung.

In der nachfolgenden Beschreibung werden für gleiche und gleichwirkende Teile dieselben Bezugsziffern verwendet.

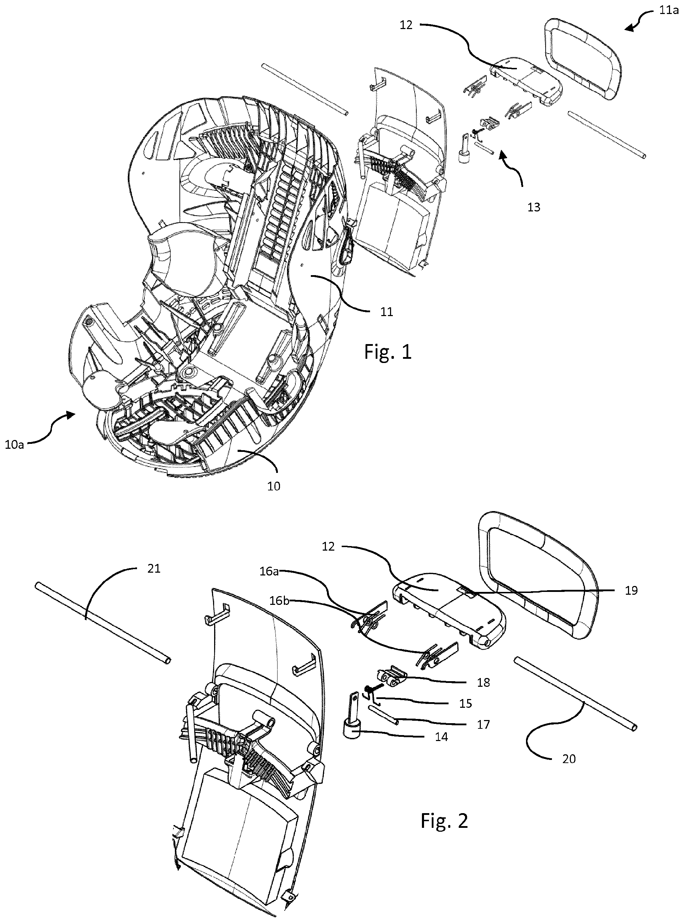

Fig. 1 zeigt eine Explosionsdarstellung von Grundelementen des erfindungsgemäßen Kindersitzes. Dieser umfasst einen Sitzbereich 10 sowie eine Rückenlehne 11 und weist ein vorderes Ende 10a sowie ein hinteres Ende 11a auf. An der Rückenlehne 11 ist ein Rückprallschutzelement 12 (in Form einer Klappe) angeordnet. Das Rückprallschutzelement kann über eine Betätigungseinrichtung 13 von einer Ruhe- in eine Funktionsstellung überführt werden. Rückprallschutzelement 12 und Betätigungseinrichtung 13 sind vergrößert in Fig. 2 dargestellt. Dort erkennt man, dass die Betätigungseinrichtung 13 (unter anderem) eine träge Masse 14 (Schwungmasse), ein erstes Federelement 15, zwei zweite Federelemente 16a, 16b(wobei ggf. auch nur ein oder mehr als zwei zweite Federelemente vorgesehen sein können), ein Lager 17 für die träge Masse 14 sowie einen Rasthaken 18 aufweist. Der Rasthaken 18 kann mit einer entsprechenden Rastaufnahme 19 an dem Rückprallschutzelement 12 zusammenwirken derart, dass in der Ruhestellung eine Verrastung des Rückprallschutzelementes 12 ermöglicht wird. Das Rückprallschutzelement 12 ist um eine Achse 20 verschwenkbar gelagert. Im zusammengebauten Zustand stützen sich die zweiten Federelemente 16a, 16b an einer Stange 21 ab.

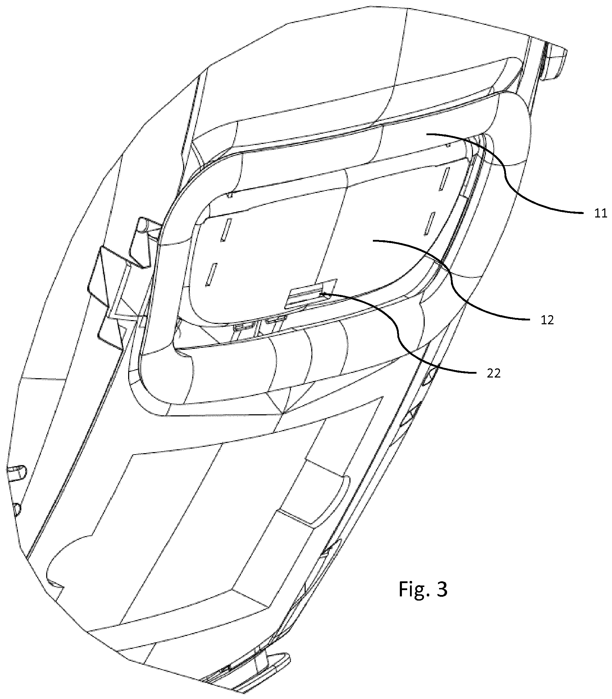

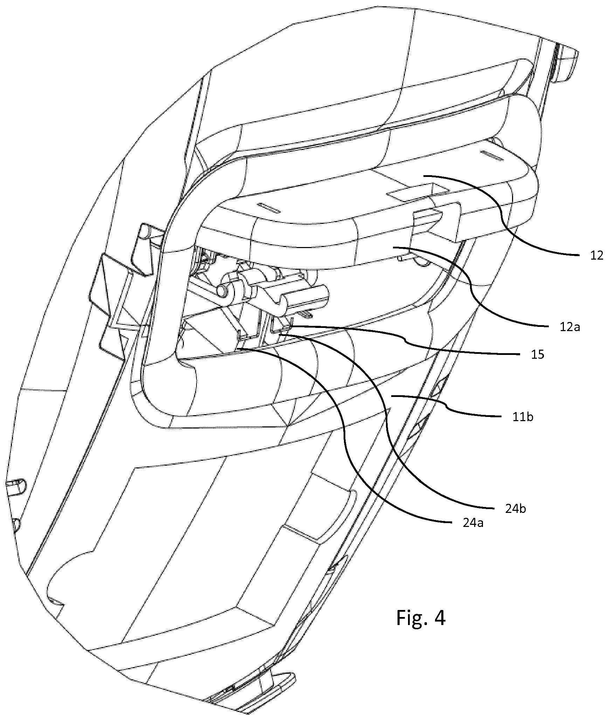

Fig. 3 zeigt das Rückprallschutzelement 12 in einer Ruhestellung, in der es in die Rückenlehne 11 (bündig) eingebettet ist. Demgegenüber zeigt Fig. 4 die Funktionsstellung des Rückprallschutzelementes 12. In dieser Funktionsstellung ragt das Rückprallschutzelement, insbesondere eine distales Ende 12a desselben, von der Rückenlehne (bzw. einer Rückseite 11b derselben) nach hinten vor. Im Falle eines Rückpralls reduziert das Rückprallschutzelement 12 also in dieser Position die mögliche Bewegung nach hinten, so dass die Auswirkungen des Rückpralls reduziert werden.

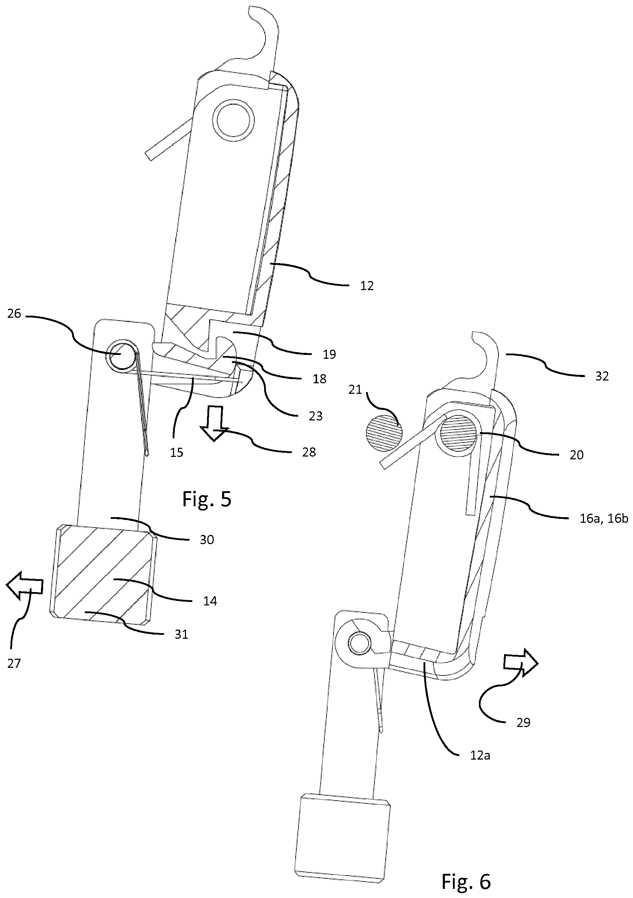

In den Schnittansichten gemäß Fig. 5 und 6 ist der Mechanismus für das Überführen von Ruhe- in Funktionsstellung im Detail erkennbar. Dabei zeigen die Fig. 5 und 6 Betätigungseinrichtung und Rückprallschutzelement in der Ruhestellung.

In der in Fig. 5 und 6 gezeigten Ruhestellung ist das erste Federelement 15 vorgespannt und drückt damit den Rasthaken 18 in die Rastaufnahme 19, so dass das Rückprallschutzelement 12 in der Ruhestellung arretiert ist. Die Arretierung kann ggf. manuell dadurch aufgehoben werden, dass über eine Öffnung 22 (siehe Fig. 3) ein Ende 23 des Rasthakens 18 aus seiner Rastposition herausgedrückt wird. Das erste Federelement 15 grenzt also einerseits an dem Rasthaken 18 an und ist andererseits (siehe auch Fig. 2 und 4) an der Rückenlehne abgestützt. Dazu sind vorzugsweise Anschlagselemente 24a, 24b vorgesehen (es kann auch nur ein oder mehr als zwei Anschlagselemente vorgesehen sein). Im Falle eines Aufpralls wird nun der Kindersitz gegenüber dem Untergrund abgebremst. Aufgrund ihrer Trägheit bewegt sich die träge Masse 14 jedoch weiter, so dass sie um die Achse 26 (siehe Fig. 5 und 6) gemäß dem Pfeil 27 verschwenkt wird. Dadurch bewegt sich das Ende 23 des Rasthebels 18 in Richtung des Pfeils 28, da der Rasthebel 18 in entsprechender Wirkverbindung mit der trägen Masse 14 ist (Rasthebel und träge Masse können beispielsweise fest miteinander verbunden sein oder einstückig ausgebildet sein). Dadurch wird die Verrastung aufgehoben und die zweiten Federelemente 16a, 16b zwingen das Rückprallschutzelement 12 in eine Rotation gemäß dem Pfeil 29. Dadurch kann dann die Position gemäß Fig. 4 erreicht werden. Die träge Masse 14 kann konkret einen verschwenkbaren Arm 30 sowie ein (gegenüber dem verschwenkbaren Arm 30 verbreitertes) Endstück 31 aufweisen.

Ein Anschlagselement 32 (im konkreten Fall im Querschnitt hakenförmig ausgebildet) schlägt in der Funktionsstellung an die Stange 21 an, wie aus Fig. 6 (die grundsätzlich die Ruhestellung zeigt) abgeleitet werden kann. Dadurch liegt eine klar definierte Funktionsstellung vor und es wird verhindert, dass die Federelemente 16a, 16b das Rückprallschutzelement zu weit rotieren.

Abänderungen hiervon sind dem Fachmann geläufig.

### Bezugszeichen

- 10: Sitzbereich
- 10a: vorderes Ende
- 11: Rückenlehne
- 11a: hinteres Ende
- 11b: Rückseite
- 12: Rückprallschutzelement
- 12a: distales Ende
- 13: Betätigungseinrichtung
- 22: Öffnung
- 23: Ende
- 24a: Anschlagselement
- 24b: Anschlagselement
- 26: Achse
- 27: Pfeil
- 28: Pfeil
- 29: Pfeil
- 30: (verschwenkbarer) Arm
- 31: Endstück
- 32: Anschlag

## Patentansprüche

1. Kindersitz zur Anbringung auf einem Fahrzeugsitz, insbesondere Kraftfahrzeugsitz, umfassend einen Sitzabschnitt (10) und eine Rückenlehne (11) sowie mindestens ein Rückprallschutzelement (12), das eine Ruhestellung und mindestens eine Funktionsstellung einnehmen kann, wobei ein distales Ende (12a) des Rückprallschutzelementes (12) in der mindestens einen Funktionsstellung weiter nach außen verlagert ist als in der Ruhestellung, wobei eine Betätigungseinrichtung (13) vorgesehen und derart ausgebildet ist, dass das Rückprallschutzelement (12) bei Überschreiten eines Grenzwertes einer Beschleunigung des Kindersitzes von seiner Ruhestellung in die Funktionsstellung überführt wird, wobei das Rückprallschutzelement (12) in der Funktionsstellung von einer Rückseite (11b) der Rückenlehne (11) vorsteht.

2. Kindersitz nach Anspruch 1,
**dadurch gekennzeichnet, dass**
mindestens ein Rückprallschutzelement (12) vorgesehen ist, dessen distales Ende in der Funktionsstellung weiter in eine Richtung, die von einem Fußende zu einem Kopfendes des Kindersitzes weist, verlagert ist und/oder
mindestens ein Rückprallschutzelement (12) vorgesehen ist, dessen distales Ende in der Funktionsstellung im Gebrauch einer Rückenlehen des Fahrzeugsitzes näher ist als in der Ruhestellung und/oder mindestens ein Rückprallschutzelement (12) vorgesehen ist, dessen distales Ende in der Funktionsstellung weiter in eine Richtung, die vom Kopfende zum Fußende weist, verlagert ist.

3. Kindersitz nach einem der vorhergehenden Ansprüche,
**dadurch gekennzeichnet, dass**
das Rückprallschutzelement (12) von der Ruhe- in die Funktionsstellung verschwenkbar ist, wobei ein Schwenkwinkel vorzugsweise mindestens 20°, vorzugsweise mindestens 35° noch weiter vorzugsweise mindestens 45° beträgt und/oder vorzugsweise höchstens 180°, weiter vorzugsweise höchstens 150°, noch weiter vorzugsweise höchstens 135° beträgt.

4. Kindersitz nach einem der vorhergehenden Ansprüche,
**dadurch gekennzeichnet, dass**
das Rückprallschutzelement (12) durch eine(n), insbesondere verschwenkbare(n), Klappe oder Bügel gebildet ist oder eine(n) solche(n) umfasst.

5. Kindersitz nach einem der vorhergehenden Ansprüche,
**dadurch gekennzeichnet, dass**
die Betätigungseinrichtung (13) eine träge Masse (14), insbesondere eine Schwungmasse, aufweist, die derart gelagert ist, dass sie sich im Falle eines Abbremsens eines Hauptkörpers des Kindersitzes gegenüber diesem weiterbewegt und dadurch eine Überführung in die Funktionsstellung freigibt.

6. Kindersitz nach einem der vorhergehenden Ansprüche,
**dadurch gekennzeichnet, dass**
die Betätigungseinrichtung (13) eine Vorspannvorrichtung (15), insbesondere eine Federeinrichtung, aufweist, die das Rückprallschutzelement (12) in der Ruhestellung in Richtung Funktionsstellung drängt.

7. Kindersitz nach einem der vorhergehenden Ansprüche,
**dadurch gekennzeichnet, dass**
die Betätigungseinrichtung (13) eine Halteeinrichtung, insbesondere eine Rasteinrichtung aufweist, die ausgebildet ist, das Rückprallschutzelement (12) in seiner Ruhestellung zu halten, insbesondere zu verrasten.

8. Kindersitz nach einem der vorhergehenden Ansprüche,
**dadurch gekennzeichnet, dass**
eine Funktionsstellungs-Halteeinrichtung, insbesondere eine Funktionsstellungs-Rasteinrichtung vorgesehen ist, um das Rückprallschutzelement (12) in der Funktionsstellung zu halten, insbesondere zu verrasten.

9. Kindersitz nach einem der vorhergehenden Ansprüche,
**dadurch gekennzeichnet, dass**
mindestens zwei, vorzugsweise mindestens drei, Funktionsstellungen eingenommen werden können, die sich insbesondere durch einen Schwenkwinkel gegenüber der Ruhestellung unterscheiden.

10. Kindersitz nach einem der vorhergehenden Ansprüche,
**dadurch gekennzeichnet, dass**
der Beschleunigungsgrenzwert mindestens 2,5 g, vorzugsweise mindestens 4,0 g, weiter vorzugsweise mindestens 8,0 g beträgt.

11. Kindersitz nach einem der vorhergehenden Ansprüche,
**dadurch gekennzeichnet, dass**
die Betätigungseinrichtung (13) zum passiven und/oder aktiven Überführen in die Funktionsstellung ausgebildet ist.

12. Kindersitz nach einem der vorhergehenden Ansprüche,
**dadurch gekennzeichnet, dass**
die Betätigungseinrichtung (13) so ausgebildet ist, dass eine Zeitspanne zwischen Beginn und Ende des Überführens von Ruhe- in Funktionsstellung weniger als 50 ms, vorzugsweise weniger als 35 ms beträgt, weiter vorzugsweise weniger als 25 ms beträgt.

13. Kindersitz nach einem der vorhergehenden Ansprüche,
**dadurch gekennzeichnet, dass**
das Rückprallschutzelement (12) zur Absorption von Energie ausgebildet ist, insbesondere mindestens ein energieabsorbierendes Element aufweist.

14. Kindersitz nach einem der vorhergehenden Ansprüche,
**dadurch gekennzeichnet, dass**
das Rückprallschutzelement (12) in der Ruheposition zumindest im Wesentlichen parallel zu einer das Rückprallschutzelement (12) umgebenden Außenfläche des Kindersitzes angeordnet ist und/oder in die umgebende Außenfläche eingebettet ist und/oder bündig mit der umgebenden Außenfläche abschließt.

## Claims

1. Child safety seat for attachment to a vehicle seat, in particular a motor vehicle seat, comprising a seat section (10) and a backrest (11) and also at least one rebound protection element (12) which can assume a rest position and at least one functional position, wherein a distal end (12a) of the rebound protection element (12) is shifted further outwards in the at least one functional position than in the rest position, wherein an actuation device (13) is provided and is designed such that the rebound protection element (12) is transferred from its rest position to the functional position when a limit value of an acceleration of the child safety seat is exceeded, wherein the rebound protection element (12) in the functional position protrudes from a rear side (11b) of the backrest (11).

2. Child safety seat according to claim 1,
**characterized in that**
at least one rebound protection element (12) is provided, the distal end of which in the functional position is shifted further in a direction pointing from a bottom end to a top end of the child safety seat, and/or
at least one rebound protection element (12) is provided, the distal end of which, during use, is closer to a backrest of the vehicle seat in the functional position than in the rest position, and/or
at least one rebound protection element (12) is provided, the distal end of which in the functional position is shifted further in a direction pointing from the top end to the bottom end.

3. Child safety seat according to any one of the preceding claims,
**characterized in that**
the rebound protection element (12) can be pivoted from the rest position to the functional position, a pivot angle preferably being at least 20°, preferably at least 35°, even more preferably at least 45° and/or preferably at most 180°, more preferably at most 150°, even more preferably at most 135°.

4. Child safety seat according to any one of the preceding claims,
**characterized in that**
the rebound protection element (12) is formed by or comprises a flap or bracket, in particular a pivotable flap or bracket.

5. Child safety seat according to any one of the preceding claims,
**characterized in that**
the actuation device (13) has an inert mass (14), in particular a balance mass, which is mounted such that, in the event of deceleration of a main body of the child safety seat, said mass moves further than the latter and thereby enables a transfer to the functional position.

6. Child safety seat according to any one of the preceding claims,
**characterized in that**
the actuation device (13) has a biasing device (15), in particular a spring device, which urges the rebound protection element (12) in the rest position in the direction of the functional position.

7. Child safety seat according to any one of the preceding claims,
**characterized in that**
the actuation device (13) has a holding device, in particular a locking device, which is designed to hold, in particular lock, the rebound protection element (12) in its rest position.

8. Child safety seat according to any one of the preceding claims,
**characterized in that**
a functional position holding device, in particular a functional position locking device, is provided for holding, in particular locking, the rebound protection element (12) in the functional position.

9. Child safety seat according to any one of the preceding claims,
**characterized in that**
at least two, preferably at least three, functional positions can be assumed, which differ in particular by a pivot angle relative to the rest position.

10. Child safety seat according to any one of the preceding claims,
**characterized in that**
the acceleration limit value is at least 2.5 g, preferably at least 4.0 g, more preferably at least 8.0 g.

11. Child safety seat according to any one of the preceding claims,
**characterized in that**
the actuation device (13) is designed for passive and/or active transfer to the functional position.

12. Child safety seat according to any one of the preceding claims,
**characterized in that**
the actuation device (13) is designed such that a period of time between the start and end of the transfer from the rest position to the functional position is less than 50 ms, preferably less than 35 ms, more preferably less than 25 ms.

13. Child safety seat according to any one of the preceding claims,
**characterized in that**
the rebound protection element (12) is designed to absorb energy, in particular has at least one energy-absorbing element.

14. Child safety seat according to any one of the preceding claims,
**characterized in that**
the rebound protection element (12) in the rest position is arranged at least substantially parallel to an outer surface of the child safety seat surrounding the rebound protection element (12), and/or is embedded in the surrounding outer surface, and/or terminates flush with the surrounding outer surface.

## Revendications

1. Siège pour enfant à installer sur un siège de véhicule, en particulier un siège de véhicule à moteur, comprenant une partie d'assise (10) et un dossier (11) ainsi qu'au moins un élément antirebond (12) qui peut prendre une position de repos et au moins une position de fonctionnement, une extrémité distale (12a) de l'élément antirebond (12) étant déplacée plus loin vers l'extérieur dans l'au mois une position de fonctionnement que dans la position de repos, dans lequel est prévu un dispositif d'actionnement (13) qui est conformé de telle manière que l'élément antirebond (12) passe de la position de repos à la position de fonctionnement quand une valeur limite d'accélération du siège pour enfant est dépassée, l'élément antirebond (12) dépassant d'une face arrière (11b) du dossier (11) dans la position de fonctionnement.

2. Siège pour enfant selon la revendication 1, **caractérisé en ce qu'**il est prévu au moins un élément antirebond (12) dont l'extrémité distale est déplacée plus loin, dans la position de fonctionnement, dans un sens allant d'une extrémité côté pieds à une extrémité côté tête du siège pour enfant et/ou
il est prévu au moins un élément antirebond (12) dont l'extrémité distale est plus proche d'un dossier du siège de véhicule en service dans la position de fonctionnement que dans la position de repos et/ou
il est prévu au moins un élément antirebond (12) dont l'extrémité distale est déplacée plus loin, dans la position de fonctionnement, dans un sens allant d'une extrémité côté tête à une extrémité côté pieds.

3. Siège pour enfant selon l'une des revendications précédentes, **caractérisé en ce que** l'élément antirebond (12) peut pivoter de la position de repos à la position de fonctionnement, un angle de pivotement étant de préférence d'au moins 20°, de préférence d'au moins 35° et mieux encore d'au moins 45° et/ou de préférence de 180° au maximum, de préférence de 150° au maximum et mieux encore de 135° au maximum.

4. Siège pour enfant selon l'une des revendications précédentes, **caractérisé en ce que** l'élément antirebond (12) est formé par ou comprend un volet ou un étrier, en particulier pivotant.

5. Siège pour enfant selon l'une des revendications précédentes, **caractérisé en ce que** le dispositif d'actionnement (13) comprend une masse inerte (14), en particulier une masse mobile, qui est supportée de telle façon qu'en cas de décélération d'un corps principal du siège pour enfant, elle continue à se déplacer et débloque ainsi le passage dans la position de fonctionnement.

6. Siège pour enfant selon les revendications précédentes, **caractérisé en ce que** le dispositif d'actionnement (13) comprend un dispositif de précontrainte (15), en particulier un dispositif de ressort, qui pousse l'élément antirebond (12) dans la position de repos vers la position de fonctionnement.

7. Siège pour enfant selon l'une des revendications précédentes, **caractérisé en ce que** le dispositif d'actionnement (13) comprend un dispositif de maintien, en particulier un dispositif d'enclenchement, conçu pour retenir, en particulier enclencher, l'élément antirebond (12) dans sa position de repos.

8. Siège pour enfant selon l'une des revendications précédentes, **caractérisé en ce qu'**il est prévu un dispositif de maintien dans la position de fonctionnement, en particulier un dispositif d'enclenchement dans la position de fonctionnement, pour retenir, en particulier enclencher, l'élément antirebond (12) dans la position de fonctionnement.

9. Siège pour enfant selon l'une des revendications précédentes, **caractérisé en ce qu'**au moins deux positions de fonctionnement, de préférence trois, peuvent être prises, qui diffèrent en particulier par un angle de pivotement par rapport à la position au repos.

10. Siège pour enfant selon l'une des revendications précédentes, **caractérisé en ce que** la valeur limite d'accélération est d'au moins 2,5 *g*, de préférence d'au moins 4,0 *g*, en particulier d'au moins 8,0 *g*.

11. Siège pour enfant selon l'une des revendications précédentes, **caractérisé en ce que** le dispositif d'actionnement (13) est conçu pour passer passivement et/ou activement dans la position de fonctionnement.

12. Siège pour enfant selon l'une des revendications précédentes, **caractérisé en ce que** le dispositif d'actionnement (13) est conçu pour qu'un intervalle de temps entre le début et la fin du passage de la position de repos à la position de fonctionnement dure moins de 50 ms, de préférence moins de 35 ms, en particulier moins de 25 ms.

13. Siège pour enfant selon l'une des revendications précédentes, **caractérisé en ce que** l'élément antirebond (12) est conçu pour absorber de l'énergie, en particulier au moyen d'un élément absorbant de l'énergie.

14. Siège pour enfant selon l'une des revendications précédentes, **caractérisé en ce que** l'élément antirebond (12) dans la position de repos est au moins sensiblement parallèle à une surface extérieure du siège pour enfant entourant l'élément antirebond (12) et/ou est intégré dans la surface extérieure environnante et/ou aboutit en affleurement avec la surface extérieure environnante.
